# EUROPÄISCHE PATENTSCHRIFT

(11) **EP 1 831 468 B1**
(45) Veröffentlichungstag und Bekanntmachung des Hinweises auf die Patenterteilung: **16.07.2014**
(21) Anmeldenummer: 05816456.7
(22) Anmeldetag: 02.12.2005
(51) Int. Cl.: E01B 11/44, E01B 7/00, B23K 20/12, B23K 101/26

(54) **REIBSCHWEISSVERFAHREN**
FRICTION WELDING METHOD
PROCEDE DE SOUDAGE PAR FRICTION

(30) Priorität: 10.12.2004 AT 20852004
(43) Veröffentlichungstag der Anmeldung: 12.09.2007
(73) Patentinhaber: voestalpine Weichensysteme GmbH, 8740 Zeltweg (AT); voestalpine VAE GmbH, 1010 Wien (AT)
(72) Erfinder: STOCKER, Erik, A-8720 Knittelfeld (AT); OSSBERGER, Heinz, A-8734 Grosslobming (AT)
(74) Vertreter: Keschmann, Marc
(86) Internationale Anmeldenummer: PCT/AT2005/000487
(87) Internationale Veröffentlichungsnummer: WO 2006/060832

(56) Entgegenhaltungen:
- EP-A- 1 459 833
- DE-A1- 2 307 002
- DE-A1- 2 834 282

## Beschreibung

Die Erfindung bezieht sich auf ein Verfahren zum Verbinden von aus Manganhartstahlguss bestehenden Weichen- oder Kreuzungsteilen oder von Manganhartstahlschienen mit Schienen aus Kohlenstoffstahl.

Für die Verbindung von Manganhartstahlgussherzstücken mit Regelschienen wurde in der AT 350881 B ebenso wie in der DE 2834282 A bereits vorgeschlagen, eine Abbrennstumpfschweißung vorzunehmen, mit welcher ein Zwischenstück mit einer Regelschiene verbunden wird. In der Folge wurde gemäß diesem älteren Vorschlag das Zwischenstück auf eine Länge von höchstens 20 bis 25 mm abgelängt, worauf mittels einer weiteren Abbrennstumpfschweißung die Verbindung des Zwischenstücks mit dem Manganhartstahlgussherzstück vorgenommen wurde. Dieser zweite Schweißvorgang erforderte eine raschere Abkühlung als nach dem ersten Schweißvorgang, wobei durch die langsamere Abkühlung eine Aufhärtung des Schienenstahls vermieden werden sollte. Die Verwendung des Zwischenstücks war insbesondere deshalb erforderlich, da bei derartigen Schweißvorgängen Legierungselemente in den Kohlenstoffstahl der Regelschiene diffundierten, wodurch nicht exakt definierte Gefüge und damit eine erhöhte Bruchgefahr die Folge waren. Zwischenstücke sind nun andererseits gegenüber Manganhartstahlguss als wesentlich weicher anzusprechen und aus diesem Grunde einem erhöhten Verschleiß ausgesetzt. Austenitische Stähle, wie sie für derartige Zwischenstücke vorgeschlagen wurden, sind somit weniger verschleißfest als das Material des Herzstücks, sodass bei zu langer Bemessung derartiger Zwischenstücke ein Eindellen der Lauffläche des Zwischenstücks zu beobachten war. Wenn andererseits das Zwischenstück zu kurz gewählt wird, besteht wiederum die Gefahr der Diffusion von Legierungselementen aus dem Manganhartstahl in den Kohlenstoffstahl. Die Zwischenstücke dienen somit dazu, die beiden Schweißstellen in thermischer Hinsicht zu trennen, um die jeweils geforderten Abkühlungsbedingungen an den jeweiligen Schweißstellen einhalten zu können und Versprödungen zu vermeiden. Versprödungen des Manganhartstahlgusses sind hierbei in erster Linie auf Diffusionseffekte zurückzuführen, wohingegen Kohlenstoffstahl durch die Temperatur der Abbrennstumpfschweißung entsprechend weichgekühlt werden kann.

Aus der EP 0070774 A, die als nächstliegender Stand der Technik angesehen wird, ist ein Verfahren zur Herstellung einer Verbindung zwischen einer Schiene aus Manganstahlguss und einer Schiene aus Kohlenstoffstahl zu entnehmen, wobei für den Schienenteil aus Manganstahlguss eine spezielle Legierung Verwendung finden soll. Für derartige Verbindungen zwischen austenitischem Manganstahl und einem Stahlwerkstück wurden auch schon aluminothermische Schmelzen und das Gießen eines derartig erhaltenen Metalles zwischen zwei in einer Form sich in Abstand befindlichen Schienenteilen in der EP 181251 A vorgeschlagen. In der AT 395122 B wurde ein Zwischenstück aus einem mit Niob und/oder Titan stabilisierten, niedriggekohlten austenitischen Stahl vorgeschlagen und insbesondere ein Chrom-Nickel-Stahl eingesetzt, wobei auch hier im Anschluss an die erste Schweißverbindung zwischen dem Zwischenstück und der Regelschiene eine Wärmebehandlung erforderlich war und insbesondere ein Diffusionsglühen bei Temperaturen zwischen 350° und 1000° C vorgeschlagen wurde.

Die Erfindung zielt nun darauf ab, ein Verfahren der eingangs genannten Art zu schaffen, bei welchem ohne die Verwendung von Zwischenstücken das Auslangen gefunden werden kann. Zur Lösung dieser Aufgabe besteht das erfindungsgemäße Verfahren im wesentlichen darin, dass die miteinander zu verbindenden Teile ohne Zwischenschaltung eines Zwischenstückes durch Reibschweißen verbunden werden, wobei die Schweißverbindung ohne Wärmebehandlung an ruhender Luft abgekühlt wird. Überraschenderweise hat sich nun gezeigt, dass durch den Einsatz eines Reibschweißverfahrens die thermische Belastung der Schweißstellen gegenüber anderen bekannten Schweißverfahren so weit reduziert werden kann, dass Diffusionsvorgänge auf ein Minimum beschränkt und unerwünschte thermische umlagerungen nahezu gänzlich eliminiert werden konnten. Durch die Verwendung des Reibschweißen als Verfahren zur Herstellung der Verbindung kann auf die zwischenschaltung eines Zwischenstückes zur Gänze verzichtet werden, ohne dass eine gesonderte Wärmebehandlung im Anschluss an die Schweißverbindung erforderlich wäre. Die einzige ggf. erforderliche Wärmebehandlung, welche aber nicht als Wärmebehandlung anzusprechen ist, wäre eine Vorwärmung der Regelschiene, um die für die Schweißverbindung erforderlichen Temperaturen in einfacher Weise erzielen zu können. Jedenfalls gelingt es, die Schweißverbindung auch ohne Zwischenschaltung eines Zwischenstücks ohne Wärmebehandlung an ruhender Luft abkühlen zu lassen, wodurch das Verfahren gegenüber den bekannten Verfahren wesentlich vereinfacht wird.

Eine Nachwärmebehandlung nach der verschweißung mit dem Manganhartstahlguss ist mit Sicherheit nicht erforderlich. Lediglich ein Vorwärmen der Regelschienen für den Reibschweißvorgang kann sich als vorteilhaft herausstellen.

Insgesamt kann somit in besonders einfacher Weise unter Verwendung von bekannten Reibschweißverfahren, wie sie beispielsweise der EP 1459833 A1 oder der WO 2004/028733 A1 entnommen werden können, auf aufwändige Wärmebehandlungen verzichtet werden, wobei überraschenderweise auch ohne Verwendung von Zwischenstücken negative Begleiterscheinungen der bekannten Schweißverfahren eliminiert werden können und die Ausbildung weichgeglühter Bereiche, welche zu Dellenbildung führen können, hintangehalten werden.

## Patentansprüche

1. Verfahren zum Verbinden von aus Manganhartstahlguss bestehenden Weichen- oder Kreuzungsteilen oder von Manganhartstahlschienen mit Schienen aus Kohlenstoffstahl, **dadurch gekennzeichnet, dass** die miteinander zu verbindenden Teile ohne zwischenschaltung eines Zwischenstückes durch Reibschweißen verbunden werden, wobei die Schweißverbindung ohne Wärmebehandlung an ruhender Luft abgekühlt wird.

## Claims

1. A method for connecting switch or crossing parts made of austenitic manganese steel casting, or austenitic manganese steel rails, with rails of carbon steel, **characterized in that** the parts to be connected are connected without interposition of an intermediate piece by friction welding, wherein the weld is cooled at static air without heat treatment.

## Revendications

1. Procédé pour assembler des pièces d'aiguillage ou de croisement en acier austénitique au manganèse moulé, ou de rails en acier austénitique au manganèse, avec des rails en acier au carbone, **caractérisé en ce que** les pièces étant reliées l'une avec l'autre sont assemblées sans utilisé une pièce intermédiaire par soudage par friction, le joint soudé étant refroidi sans traitement thermique à l'air statique.
